# EUROPEAN PATENT SPECIFICATION

(11) **EP 2 151 353 B1**
(45) Date of publication and mention of the grant of the patent: **29.09.2010**
(21) Application number: 08460033.7
(22) Date of filing: 06.08.2008
(51) Int. Cl.: B60R 11/02

(54) **A mobile phone holder for vehicles**
Mobiltelefonhalter für Fahrzeuge
Support de téléphone mobile pour véhicules

(43) Date of publication of application: 10.02.2010
(73) Proprietor: BURY Sp. z o.o., 39-300 Mielec (PL)
(72) Inventor: Bury, Henryk, 39-300 Mielec (PL)
(74) Representative: Kaminski, Zbigniew

(56) References cited:
- DE-A1- 19 934 099
- DE-U1- 29 622 275
- DE-U1- 29 705 230
- DE-U1-202005 002 935
- US-B1- 6 185 302
- US-B1- 6 229 893

## Description

This invention relates to a mobile phone holder for mechanical vehicles that is provided with a pushing-out mechanism, which unlocks the phone by pushing it out from the holder.

The German utility model No. DE 296 22 275 U1 describes a mobile phone holder, especially for mechanical vehicles, provided with a catch, which locks the phone when it is inserted into the holder, and with a button-type unlocking mechanism to release the catch. This mechanism includes a catch and the buttons, which are located on both sides. Pressing both buttons does not result in pushing the phone out from the holder but in releasing the lock only.

An inconvenience of this design is that the holder is suitable only for mobile phones, which have a hole on their rear surface to engage with the catch.

The US patent No. US 6 185 302 B1 describes a mobile phone holder for mechanical vehicles, provided with flexible side clamps with protrusions, which hold the phone by both sides and concurrently lock it by means of the catches, which slide into the holes on the phone sides. The catches are released by pressing two side buttons, which release the lock but do make the phone move from its "pressed down" position.

A major inconvenience of this solution is that it requires holes on both phone sides.

The German utility model No. DE 297 05 230 U1 describes a mobile phone holder, which - in its upper part - is provided with a rotatable fork-type catch triggered by a button, which is slideably mounted on that surface of the holder, which stays in contact with the rear wall of the phone. When the phone is inserted into the holder, the motion of the button is transferred through a slide, which is mounted slideably and perpendicularly to the axis of the button, and makes the fork-type catch swing aside and embrace the upper part of the phone. The spring, mounted inside the button, enables pushing the phone out from its "resting in the holder" position once the fork-type catch is released.

A major inconvenience of this solution is that the button, which pushes the phone out, is not protected from being accidentally pressed down. Such unintentional pressing the button results in a rotation of the fork-type catch and thus makes it impossible to insert the phone. In this position of the catch any attempts to insert the phone into the holder may likely damage the catch.

Also, a NOKIA mobile phone holder is known, in which a part of the wall, which stays in contact with the rear wall of the phone, is mounted tiltably and perpendicularly to the axis of the holder. This holder is provided with a rotatably mounted fork-type catch, which is released when a mobile phone is inserted into the holder and presses the tiltable wall. The catching pins slip into the holes located in the upper front wall of the phone. Moreover, this mechanism includes two releasing buttons, which move towards the axis and this motion is kinematically transferred into a rotation of the fork-type catch, which moves forward and unlocks the phone. When the catch is released, the tiltable wall lifts the phone at one side and facilitates removing it from the holder.

Similarly to the previous case, a major inconvenience of this solution is that the tiltable wall may be pressed accidentally, which makes the fork-type catch move into a position where it is not possible to insert the phone into the holder and applying a force may damage the catch. DE 20 2005 002 935 U discloses a mobile phone holder according to the preamble of claim 1.

The objective of this invention is to provide a mobile phone holder that is provided with a socket, into which a mobile phone holder is inserted and that makes it possible to concurrently unlock the phone and push it out from the socket by pressing a button located on a side wall of the holder. The said holder, adapted especially to mobile phones provided with holes in the upper part of the front wall, enables an easy connection with a slide adapter that is provided with contacts, for example a power supply contact and a speaker contact, and that is pushed out by pressing the button, which unlocks the phone.

According to the invention there is provided a mobile phone holder for mechanical vehicles, characterised in that it has a slide-type locking mechanism, which is provided with two slideably mounted slides, namely an upper slide connected with the catches and mounted slideably in a flat guide, fixed against the holder base, and a lower slide that is provided with protrusions and mounted slideably in the guides located in the base and in the holes located in the flat base; between the upper and the lower slide there is provided a pushing element, the base of which is unlocked when the lower slide is in its lower position, thus making the pushing element move towards the inside of the holder and unlock the upper slide, which moves downwards pressed by a spring.

The slide-type locking mechanism is favourably provided with an unlocking button, which is mounted slideably in the flat guide and perpendicularly to the axis of the holder and which has an inclined surface, which is adapted to press the corresponding inclined surface of the upper slide thus making the upper slide move into its unlocked upper position.

The upper slide of the slide-type locking mechanism is favourably provided with a notch, which is adapted to engage with the base of the pushing element and to uncover this base when the upper slide is in its upper position thus allowing an upward move of the pushing element under the force of the spring.

Favourably, the pushing element is mounted slideably on a guiding pin, in the vicinity of which there is provided an electric contact, which connects with a contact located on the pushing element and thus closes the power supply circuit when the pushing element is in its lower position.

The upper slide is favourably provided with a transverse protrusion with catches, which are adapted to engage with the corresponding holes in the front wall of the mobile phone.

The lower slide, which has a shape of a frame, is favourably provided with a return spring that is mounted on the protrusions in the lower slide and in the flat guide.

The transverse protrusion is favourably provided with resilient power supply contacts, which are adapted to connect with the corresponding contacts of the mobile phone when the upper slide is in its lower position.

The holder, according to the invention, is favourably provided with an additional slide-type adapter with plugs, which is mounted slideably in the notch located in the upper part of the cover.

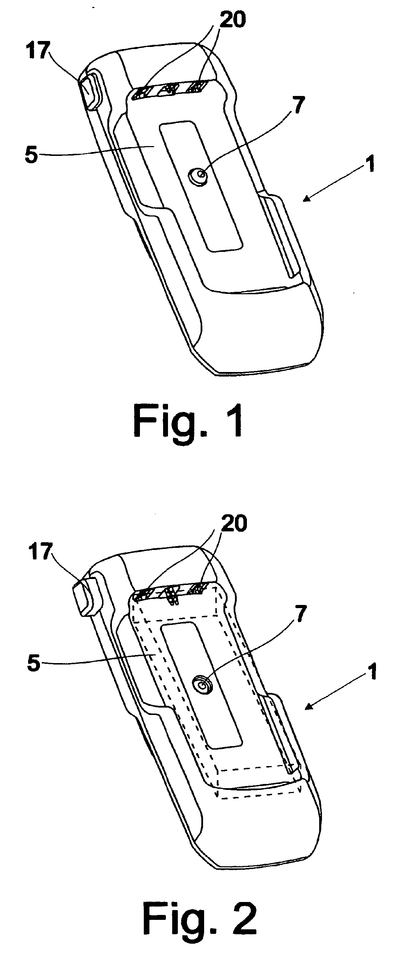

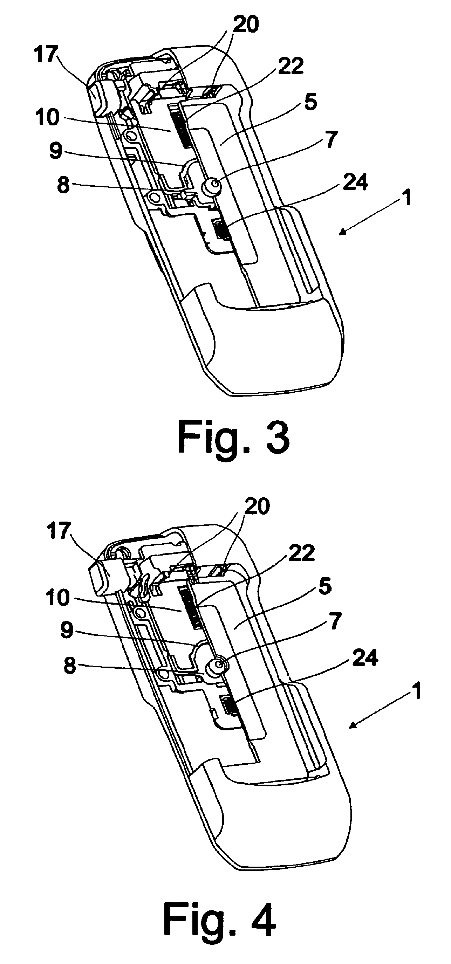

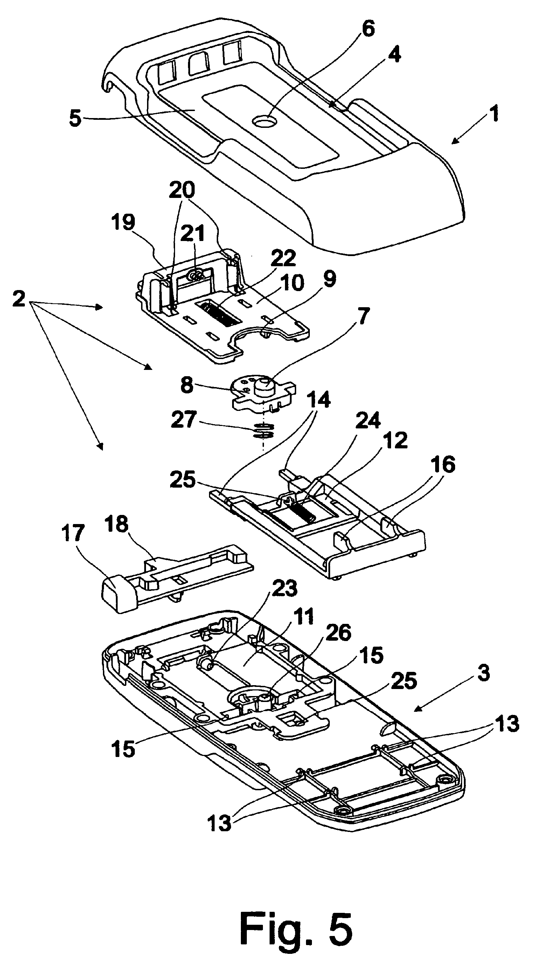

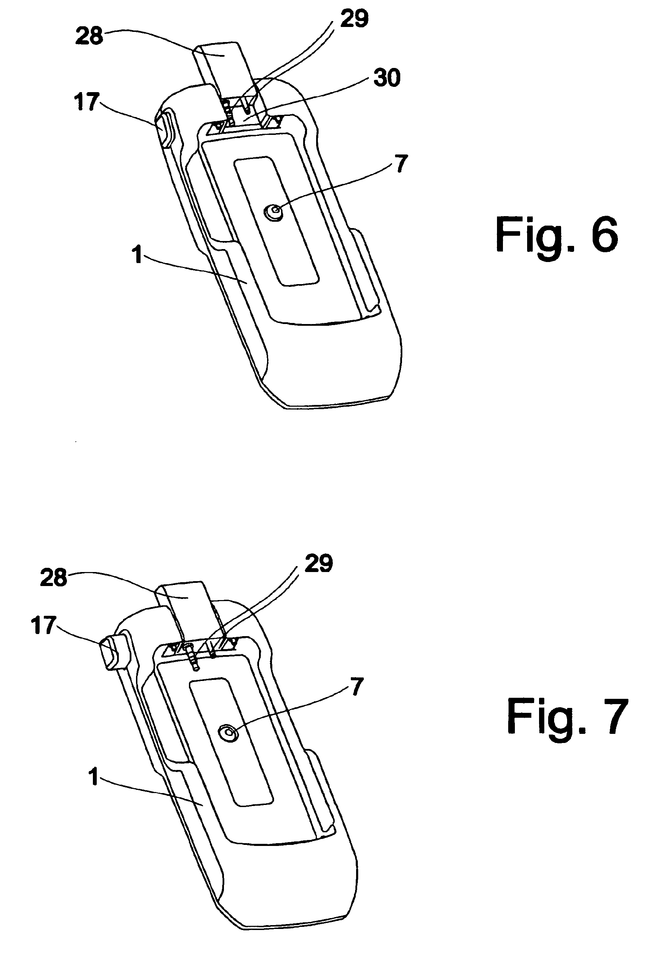

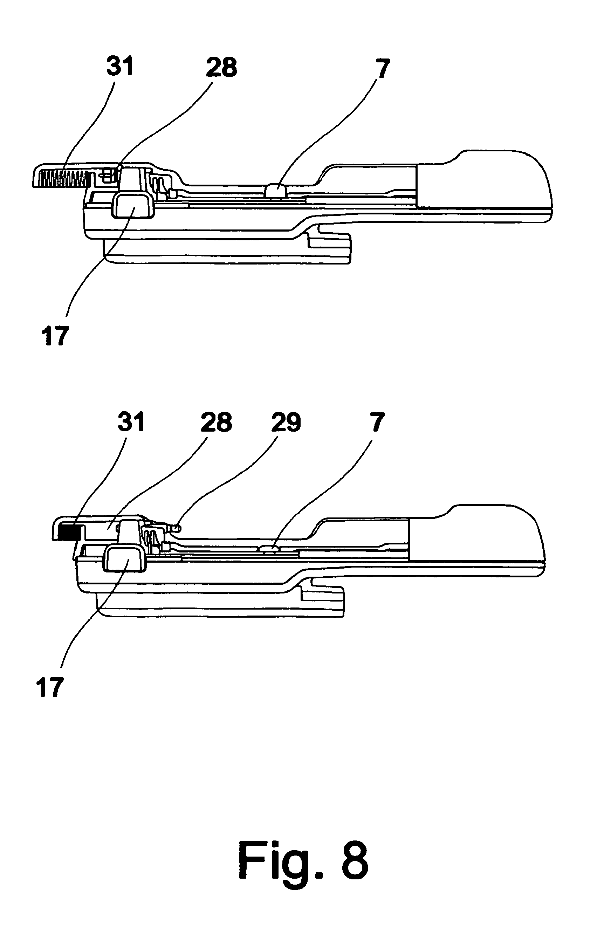

The mobile phone holder for mechanical vehicles, according to the invention, is depicted in its embodiments on the drawings, where: Fig. 1 is a perspective front view of the holder without a mobile phone; Fig. 2 is a view of the holder with a mobile phone indicated by a dashed line; Fig. 3 is a view of the holder, according to the Fig. 1, as prepared to accommodate the mobile phone, with a part of the cover not shown; Fig. 4 is a view of the holder with a mobile phone inserted into it; Fig. 5 is an exploded view of the holder with a mobile phone resting in the socket; Fig. 6 is a view of an embodiment of the mobile phone holder, according to the invention, with a slide-type adapter provided with contacts, depicted as pushed out from the holder; Fig. 7 is a view of the holder, according to the Fig. 6, with the slide-type adapter in the "inside the holder" position; Fig. 8 is a view of the coupling mechanism of the unlocking button with the slide-type adapter.

The mobile phone holder, according to the invention, as depicted in the Figs. 1-5 includes three basic units (Fig. 5), namely, a cover 1, a slide-type locking mechanism 2, and a base 3.

The cover 1 is provided with a socket 4, which is adapted to accommodate a mobile phone. In the socket wall 5, which is in contact with the rear wall of the mobile phone resting in the socket, there is provided a hole 6, in which a pushing element 7 is slideably mounted. The pushing element 7 is provided with a flat base 8, which half-round part sits in the notch 9 of the upper slide 10.

The slide-type locking mechanism 2 includes both the above-mentioned upper slide 10, mounted slideably in a flat guide 11, which is fixed to the inner wall of the cover 1, and a lower slide 12, mounted slideably in a guide 13 located in the base 3. The lower slide 12, which has a shape of a frame, is also provided with guiding protrusions 14, mounted slideably in the rectangular holes 15 of the flat guide 11. The protrusions 16 are provided to move the lower slide into its lower position, in which the pushing element 7 is released; the said protrusions 16 are pressed by the lower wall of the mobile phone inserted into the socket 4.

In the flat guide 11 there is also an unlocking button 17, mounted slideably and perpendicularly to the axis of the holder, which has an inclined surface 18 that presses the inclined surface of the lower part of the upper slide 10, not shown on the drawing.

The upper slide 10 is also provided, in its upper part, with a transverse protrusion 19, connected with the catches, which go into the holes located in the upper part of the front wall of the mobile phone, and with resilient power supply contacts 21. It is also provided with a helical spring 22, which free end rests on the protrusion 23 of the flat guide 11.

Also, the lower slide 12 is provided with a helical return spring 24, which free end rests on the protrusion 25 of the flat guide 11.

Also, the pushing element 7 is provided with a return spring 27, which is mounted on a guiding pin 26 protruding from the flat guide 11.

Next to the guiding pin 26, which guides the pushing element 7, there is an electric contact, not shown on the drawing, which is adapted to close the phone's power supply circuit, when pressed by the pushing element 7.

The mobile phone holder, as described above, operates as follows:

A mobile phone is inserted into the holder in the top-down direction and the lower part of the phone's front wall presses the protrusions 16 and thus makes the lower slide 12 move downwards along the guides 13 of the base 3. In the lower position of the lower slide 12 the flat base 8 of the pushing element 7 is released, which enables the move of the pushing element in the hole 6. The rear wall of the mobile phone inserted into the socket 4, presses the pushing element 7 and makes it move towards the centre of the base 3 of the holder. The upper slide 10 is then unlocked and, under the force of the helical return spring 22, moves downwards, whereas its catches 20 enter into the corresponding holes in the mobile phone and lock the mobile phone in the socket 4 of the holder. At the same time, the resilient power supply contacts 21 touch the corresponding contacts of the mobile phone. In this position the mobile phone is locked in the socket 4 and powered by means of the resilient contacts 21.

At the same time, pressing the pushing element 7 results in that the contact, which is located next to the guiding pin 26, touches the contact of the pushing element and thus closes the power supply circuit. At the same time, when the mobile phone is inserted into the socket 4 the unlocking button 17 is released by the upper slide 10, which is at this moment in its lower position, and pushed out again under the force of its return spring, not shown on the drawing. In this position of the unlocking button 17 the upper slide 10 is blocked in its lower position, which provides a firm locking the mobile phone by the catches 20.

In order to unlock the mobile phone resting in the socket 4 of the holder the unlocking button 17 is pressed towards the axis of the holder, which results in that the inclined surface 18 presses the inclined part of the surface of the upper slide 10, the upper slide moves then upwards and the catches 20 are removed from the holes in the mobile phone. At the same time, the upward travel of the upper slide 10 releases the flat base 8 and makes the pushing element 7 move upwards, under the force of the spring 27, which results in pushing the mobile phone out from the socket 4. The mobile phone can be then taken out from the socket 4 easily.

The mobile phone holder, as presented in the Figs. 6, 7 and 8 is different from the holder as described above in that it is provided with an additional slide-type adapter 28 with plugs 29, one of which is used, for example, to provide the power supply, and the other - to provide connection to a speaker. The adapter 28 sits slideably in the notch 30 in the cover 1 of the holder. The adapter is also provided with a return spring 31, which is mounted within its casing and which facilitates pushing the adapter out from the cover 1 along the notch 29.

To place the plugs 29 in the mobile phone, already inserted into the socket 4, the adapter 28 is moved downwards with a user's finger. Pressing the unlocking button 17 automatically results in pushing the adapter 28 out and making the plugs 29 escape from the "in-contact" position. In order to provide an automatic pushing the slide-type adapter out, the holder as depicted in the Figs. 6, 7, and 8, similarly has a pushing-out mechanism, consisting of an inclined surface, which is adapted to contact with the inclined surface 18 of the unlocking button 17. The operation of this mechanism is based on a concurrent upward travel of the upper slide 10 and the slide-type adapter 28, when the unlocking button 17 is pressed.

The mobile phone for mechanical vehicles, according to the invention, can be mounted on the dashboard or the windshield of the mechanical vehicle by means of any method.

### References

- 1: cover
- 2: slide-type locking mechanism
- 3: base of the holder
- 4: socket for a mobile phone
- 5: socket wall, which is in contact with the rear wall of the mobile phone
- 6: hole for a pushing element
- 7: pushing element
- 8: flat base of the pushing element
- 9: notch in the upper slide for the flat base of the pushing element
- 10: upper slide
- 11: flat guide
- 12: lower slide
- 13: guide in the base 1 to guide the lower slide 12
- 14: guiding protrusions for the lower slide 12
- 15: rectangular holes of the flat guide 11
- 16: protrusions of the lower slide 12
- 17: unlocking button
- 18: an inclined surface of the unlocking button 17
- 19: transverse protrusion of the upper slide 10
- 20: catches adapter to engage with the holes in the front wall of the mobile phone
- 21: resilient power supply contacts mounted in the transverse protrusion 19
- 22: helical spring
- 23: protrusion, on which the helical spring 22 rests
- 24: helical return spring of the lower slide 12
- 25: protrusion of the lower slide 12 and the flat guide 11, on which the helical return spring 24 is mounted
- 26: guiding pin of the pushing element 7
- 27: return spring of the pushing element 7
- 28: slide-type adapter
- 29: plugs of the slide-type adapter 28
- 30: notch in the upper part of the cover 1 for the slide-type adapter 28
- 31: return spring, which supports pushing the slide-type adapter 28 out

## Claims

1. A mobile phone holder for mechanical vehicles that is provided with movable catches (20) entering into the corresponding holes in one part of the front wall of the mobile phone and with a pushing element (7), mounted slideably in a hole (6) in the holder socket (4) wall (5), which is in contact with the rear wall of the mobile phone, and that is provided with a mechanism to push the catches (20) out when the phone sits in the socket (4) of the holder and with an unlocking button (17), which unlocks the return travel of these catches (20), **characterized in that** its slide-type locking mechanism (2) is provided with two slideably mounted slides, namely the upper slide (10) connected with the catches (20) and mounted slideably in a flat guide (11), fixed against the holder base (3), and the lower slide (12) that is provided with protrusions (16) and mounted slideably in the guides (13) located in the base (3) and in the holes (15) located in the flat guide (11); between the upper slide (10) and the lower slide (12) there is provided the pushing element (7), the base (8) of which is unlocked when the lower slide (12) is in its lower position, thus making the pushing element (7) move towards the inside of the holder and unlock the upper slide (10), which moves downwards pressed by a return spring (22).

2. The holder according to Claim 1, **characterised in that** its slide-type locking mechanism (2) is provided with an unlocking button (17), which is mounted slideably in the flat guide (11) and perpendicularly to the axis of the holder and which has an inclined surface (18), which is adapted to press the corresponding inclined surface of the upper slide (10) thus making the upper slide (10) move into its unlocked upper position.

3. The holder according to Claim 1, **characterised in that** the upper slide of the slide-type locking mechanism (10) is provided with a notch (9), which is adapted to engage with the base (8) of the pushing element (7) and to uncover this base (8) when the upper slide (10) is in its upper position thus allowing an upward move of the pushing element (7) under the force of the spring (27).

4. The holder according to Claim 3, **characterised in that** the pushing element (7) is mounted slideably on a guiding pin (26), in the vicinity of which there is provided an electric contact, which connects with a contact located on the pushing element (7) and thus closes the power supply circuit when the pushing element (7) is in its lower position.

5. The holder according to Claim 1, **characterised in that** its upper slide (10) is provided with a transverse protrusion (19) with the catches (20), which are adapted to engage with the corresponding holes in the front wall of the mobile phone.

6. The holder according to Claim 1, **characterised in that** its lower slide (12), which has a shape of a frame, is provided with a return spring (24) that is mounted on the protrusions (25) in the lower slide (12) and in the flat guide (11).

7. The holder according to Claim 5, **characterised in that** the transverse protrusion (19) of the upper slide (10) is provided with resilient power supply contacts (21), which are adapted to connect with the corresponding contacts of the mobile phone when the upper slide (10) is in its lower position.

8. The holder according to Claim 1, **characterised in that** the upper slide (10) is provided with an additional slide-type adapter (28) with plugs (29), which is mounted slideably in the notch (30) located in the upper part of the cover (1).

## Patentansprüche

1. Ein die in entsprechende Öffnungen einer der Handy- Frontwände hineinzugehenden beweglichen Daumen (20) und den Ausstoß-Pilz (7) aufweisender und verschiebbar in der Öffnung (6) der die Handy-Hinteroberfläche berührende Wand (5) der Halter- Tasche (4) befestigter Kraftfahrzeug-Handyhalter, wobei dieser Halter einen Mechanismus zum Herausschieben der Daumen (20) in der Lage des in der Halter- Tasche (4) eingesetzten Handys und einen Auslösedruckknopf (17) zum Entblocken der Rückbewegung dieser Daumen (20) aufweist, **gekennzeichnet dadurch, dass** sein Schieber- Blockiermechanismus (2) zwei verschiebbar einzusetzenden Schieber d.h. einen mit den Daumen (20) verbundenen und in der zur Halter-Grundlage (3) unbeweglichen flachen Führung (11) einzusetzenden Oberschieber (10) und einen mit zwei Druck-Vorsprüngen (16) ausgestatteten und verschiebbar in den Spalt-Führungen (13) der Grundlage (3) und in den Öffnungen (15) der flachen Grundlage (11) einzusetzenden Unterschieber (12) aufweiset, wobei zwischen dem Oberschieber (10) und dem Unterschieber (12) der Ausstoß-Pilz (7) befestigt ist, dessen Grundlage (8) in der unteren Stellung des Unterschiebers (12) entblockt wird, wodurch die Bewegung des Ausstoß-Pilzes (7) ins Innere des Halters und das Entsperren des Oberschiebers (10) möglich wird, welcher Schieber sich in der Richtung nach unten unter dem Einfluss der betätigenden Feder verschiebt.

2. Der Halter laut dem Anspruch 1 **gekennzeichnet dadurch, dass** sein Schieber-Blockiermechanismus (2) mit dem Auslösedruckknopf (17) ausgestattet ist, welcher Auslösedruckknopf verschiebbar senkrecht zur Halter-Achse in der flachen Grundlage (11) befestigt und mit einer geneigten Druckfläche (18) ausgestattet ist, welche Druckfläche mit entsprechender geneigter Fläche des Oberschiebers (10) zusammenwirkt und die Belegung des Oberschiebers (10) in dessen entblockte obere Stellung verursacht.

3. Der Halter laut dem Anspruch 1 **gekennzeichnet dadurch, dass** der Oberschieber (10) des Schieber- Blockiermechanismus (2) einen Ausschnitt (9) aufweist, welcher Ausschnitt mit der Grundlage (8) des Ausstoß-Pilzes (7) zusammenwirkt und diese Grundlage (8) in der oberen Stellung dieses Oberschiebers (10) entblößt und **dadurch** die Bewegung des Ausstoß-Pilzes (7) unter dem Einfluss der Feder (27) in der Richtung nach oben ermöglicht.

4. Der Halter laut dem Anspruch 3 **gekennzeichnet dadurch, dass** der Ausstoß-Pilz (7) verschiebbar auf dem Führungsbolzen (26) befestigt ist, wobei neben diesem Führungsbolzen (26) ein elektrischer Kontakt sich befindet, welcher Kontakt mit dem auf dem Ausstoß-Pilz (7) befestigten Kontakt zusammenwirkt und den Speisungskreis in der unteren Stellung dieses Ausstoß-Pilzes (7) schließt.

5. Der Halter laut dem Anspruch 1 **gekennzeichnet dadurch, dass** sein Oberschieber (10) mit einem mit den Daumen (20) verbundenen Quervorsprung (19) ausgestattet ist, welche Daumen mit entsprechenden Öffnungen der Frontwand des Handys zusammenwirken.

6. Der Halter laut dem Anspruch 1 **gekennzeichnet dadurch, dass** sein Unterschieber (12), in der Gestalt eines Rahmens, mit der Rückholfeder (24) ausgestattet ist, welche Feder auf den Vorsprüngen (25) im Unterschieber (12) und in der flachen Führung befestigt ist.

7. Der Halter laut dem Anspruch 5 **gekennzeichnet dadurch, dass** der Quervorsprung (19) des Oberschiebers (10) mit elastischen Speisungskontakten (21) ausgestattet ist, welche Kontakte mit entsprechenden Kontakten des Handys in der unteren Stellung des Oberschiebers (10) zusammenwirken.

8. Der Halter laut dem Anspruch 1 **gekennzeichnet dadurch, dass** sein Oberschieber (10) mit einem zusätzlichen Schieberadapter (28) mit den Kontakten (29) ausgestattet ist, welcher Adapter verschiebbar im Ausschnitt (30) im Oberteil des Deckels (1) befestigt ist.

## Revendications

1. Le portant d'un téléphone portable pour les véhicules mécaniques, équipé des dents-de-loup (20) entrant dans les orifices correspondants, sur l'une des faces frontales du téléphone portable et d'une soupape repoussant (7), fixée d'une manière décalante dans l'orifice (6), dans une face (5) de la poche (4) du portant, touchant une surface arrière du téléphone portable, et le portant est équipé d'un mécanisme avancant les dents-de-loup (20) en position du téléphone portable placé dans la poche (4) du portant, aussi d'un bouton libérant (17), débloquant un mouvement de retour de ces dents-de-loup (20), **caractérisé par le fait que** son mécanisme de tiroirs bloquant (2) est équipé en deux tiroirs fixés d'une manière décalante, c'est à dire en tiroir supérieur (10), joint avec les dents-de-loup (20) et fixé d'une manière décalante dans une glissière plate (11), immobile par rapport à la base (3), aussi qu'en tiroir inférieur (12), équipé des saillies de pression (16) et fixé d'une manière décalante dans les glissières fissurales (13) de la base (3) et dans les orifices (15) de la base plate (11), aussi entre le tiroir supérieur (10) et le tiroir inférieur (12), est-elle fixée une soupape repoussant (7) dont la base (8) soit débloquée dans une position inférieure du tiroir inférieur (12), permettant un mouvement de la soupape repoussant (7) vers l'intérieur du portant, aussi à débloquer le tiroir supérieur (10) qui, pressé par le ressort démarrant (22), se décale en bas.

2. Le portant, selon la revendication 1, **caractérisé par le fait que** son mécanisme de tiroirs bloquant (2) est équipé en bouton libérant (17), fixé d'une manière décalante en direction transversale par rapport à un axe du portant dans la glissière plate (11) et équipé en surface inclinée de pression (18) coopérant avec une surface inclinée, correspondante, du tiroir supérieur (10), provoquant un mouvement du tiroir supérieur (10) vers sa position supérieure débloquée.

3. Le portant, selon la revendication 1, **caractérisé par le fait que** le tiroir (10) du mécanisme des tiroirs bloquant (2) est équipé d'une encoche (9) coopérant avec la base (8) de la soupape repoussant (7) et découvrant dans une position supérieure de ce tiroir (10) cette base (8), en permettant un mouvement de la soupape repoussant (7) sous pression du ressort (27) en direction vers l'haut.

4. Le portant, selon la revendication 3, **caractérisé par le fait que** la soupape repoussant (7) est fixée d'une manière décalante dans un goujon de châssis (26) et à côté de ce goujon (26), il y a un contact électrique coopérant avec un contact fixé sur la soupape repoussant (7) et fermant un circuit d'alimentation dans une position choisie de cette soupape (7).

5. Le portant, selon la revendication 1, **caractérisé par le fait que** le tiroir supérieur (10) est équipé d'une saillie transversale (19), jointe avec les dents-de-loup (20), coopérant avec les orifices correspondants d'une face frontale du téléphone portable.

6. Le portant, selon la revendication 1, **caractérisé par le fait que** le tiroir inférieur (12) ayant des cadres, est équipé d'un ressort de rappel (24), fixé sur les saillies (25) dans un tiroir inférieur (12) et dans la glissière plate (11).

7. Le portant, selon la revendication 5, **caractérisé par le fait que** la saillie transversale (19) du tiroir supérieur (10) est équipé des contacts élastiques alimentant (21), coopérant avec des contacts correspondants du téléphone portable, dans une position inférieure du tiroir superieur (10).

8. Le portant, selon la revendication 1, **caractérisé par le fait que** le tiroir supérieur (10) est équipé d'un adapteur additionnel de tiroir (28) avec des broches (29), fixé d'une manière décalante dans l'encoche (30), dans une partie supérieure du couvercle (1).
